# EUROPEAN PATENT SPECIFICATION

(11) **EP 3 447 274 B1**
(45) Date of publication and mention of the grant of the patent: **16.06.2021**
(21) Application number: 17850473.4
(22) Date of filing: 13.04.2017
(51) Int. Cl.: F02K 9/48, F02K 9/95

(54) **ELECTRIC POWER-ASSISTED LIQUID-PROPELLANT ROCKET PROPULSION SYSTEM**
ELEKTRISCH ANTRIEBUNTERSTÜTZES FLÜSSIGKEITSRAKETENANTRIEBSSYSTEM
SYSTÈME DE PROPULSION DE FUSÉE À ERGOLS LIQUIDE ASSISTÉ PAR ÉNERGIE ÉLECTRIQUE

(30) Priority: 14.09.2016 JP 2016179369
(43) Date of publication of application: 27.02.2019
(73) Proprietor: IHI Corporation, Tokyo 135-8710 (JP)
(72) Inventor: SAKAGUCHI, Hiroyuki, Tokyo 135-8710 (JP); MORI, Hatsuo, Tokyo 135-8710 (JP); ISHIKAWA, Yasuhiro, Tokyo 135-8710 (JP); MIYOSHI, Koichi, Tokyo 135-8710 (JP)
(74) Representative: MERH-IP Matias Erny Reichl Hoffmann Patentanwälte PartG mbB
(86) International application number: PCT/JP2017/015074
(87) International publication number: WO 2018/051566

(56) References cited:
- JP-A- H09 184 452
- JP-A- 2001 193 565
- JP-A- 2006 118 443
- JP-A- 2016 510 378
- JP-U- H0 445 200
- US-A- 2 585 626
- US-A- 3 077 073
- US-A- 3 077 073
- US-A- 5 644 920
- US-A1- 2001 015 063
- US-A1- 2008 264 372
- US-A1- 2015 354 503

## Description

### TECHNICAL FIELD

The present disclosure relates to an electric power-assisted liquid-propellant rocket propulsion system using a liquid fuel and a liquid oxidant as a propellant.

### BACKGROUND ART

Liquid-propellant rockets, which are complicated in structure as compared with solid-propellant rockets, are known to exhibit high thrust controlling performance. Typical liquid-propellant rockets use liquid hydrogen as a fuel and liquid oxygen as an oxidant. Development of rockets using liquid methane as a fuel has also been promoted (refer to Patent Literature 1). These types of propellants kept at quite low temperature are directly introduced to a propulsion system of a rocket.

Accidental evaporation of a propellant inside a propulsion system may cause a system malfunction. The propulsion system thus should be preliminarily cooled sufficiently. A large amount of the propellant is introduced to the propulsion system and drained to the outside during preliminary cooling. Namely, a large amount of the propellant is consumed during preliminary cooling of the propulsion system. Patent Literature 2 discloses a system for suppressing mass consumption of a propellant. The system includes a cooling section through which the propellant flows along a periphery of a feed line from a storage tank to a pump. This structure enhances the cooling performance of the feed line to reduce the consumption of the propellant.

Ignition of the propellant during startup of the propulsion system requires a sufficient amount of flow and pressure of the propellant.

Patent Literature 3 is related to a liquid fuel rocket engine with a closed direct auxiliary flow cycle has a combustion chamber connected to each liquid fuel source through a respective main liquid fuel supply line. A turbo pump is provided in each main fuel supply line. The turbo pump is driven by a gas generator which is connected to a first bypass fuel supply line for supplying fuel to the gas generator. An exhaust gas duct leads from the gas generator into at least one main fuel supply line for feeding gas generator exhaust gas into the main fuel supply line upstream of the turbo pump.

Patent Literature 4 is related to high output power plants and more particularly to liquid hydrogen-liquid oxygen rocket engines, whereby it is an object to provide means for cooling the combustion chamber and the exhaust nozzle with hydrogen fuel by providing inter alia a turbine, a heat exchanger and a conduit including a bypass valve for controlling the amount of fuel bypassing said turbine.

Patent Literature 5 is related to a rocket type power plant, wherein it comprises the addition of means for cooling the combustion gases driving said turbine without cooling the combustion gases in the combustion chamber of said rocket power plant. This feature comprises means for generating steam from the heat of the combustion gases supplied to said turbine and utilizing said steam to help drive said turbine. Further it comprises means to increase the pressure at the inlet side of said combustion agent pumps by pressurizing the combustion agent storage containers by a pressure derived from the pressure of the rocket combustion gases.

Patent Literature 6 is related to the field of rocket engines, and more particularly to a system for feeding a rocket engine with propellant, the system comprising a first tank, a second tank, a first feed circuit connected to the first tank, and a second feed circuit connected to the second tank. In order to cool the propellant contained in the second tank, the first circuit includes a branch passing through a first heat exchanger incorporated in the second tank.

Patent Literature 7 is related to super cooling the cryogenic liquid propellant in a vehicle propellant tank allowing the vehicle propellant tank to carry more fuel in the same volume tank while lowering the vapor pressure and thus the tank operating pressure. Lowering the tank operating pressure reduces the stress and therefore allows the walls of the tank to be thinner. Both the smaller tank volume and thinner tank wall results in an overall smaller and lighter vehicle with increased payload capability.

Patent Literature 8 is related to methods and apparatus for providing a Two-Stage Ignition System. In one embodiment of the invention, a pilot stage is employed to ignite a plurality of propellants and to create a pilot flame. The plurality of propellants are ignited in the main combustion stage using the pilot flame, and a flow of an elevated temperature combustion product is produced.

### CITATION LIST

### PATENT LITERATURE

Patent Literature 1: Japanese Unexamined Patent Application Publication No. 2007-016781
Patent Literature 2: Japanese Unexamined Patent Application Publication No. 2012-214148
Patent Literature 3: US Patent Application Publication No. 2001/015063
Patent Literature 4: US Patent Application Publication No. 3 077 073
Patent Literature 5: US Patent Application Publication No. 2 585 626
Patent Literature 6: US Patent Application Publication No. 2015/354503
Patent Literature 7: US Patent Application Publication No. 5 644 920
Patent Literature 8: US Patent Application Publication No. 2008/264372

### SUMMARY OF INVENTION

### TECHNICAL PROBLEM

As described above, the propulsion system for a rocket should be preliminarily cooled sufficiently. The propellant flows through the propulsion system during preliminary cooling and is then drained to the outside of the propulsion system. The propellant used for preliminary cooling is thus simply disposed of without being used as a fuel for an engine. A large amount of the propellant consumed during preliminary cooling increases a mass of the propulsion system to lead to a decrease in payload introduced to orbit, resulting in an increase in launching costs.

Conventional propulsion systems have no power to drive a turbopump for pressurizing a propellant before ignition of an engine. The conventional propulsion systems thus depend on a heat capacity of a combustor or a dedicated gas bottle used for startup in order to supply the propellant. However, the heat capacity of the combustor is not constant with respect to design changes and varies depending on circumferential conditions. The use of the gas bottle greatly increases the mass of the propulsion system.

### SOLUTION TO PROBLEM

An object of the present disclosure is to provide an electric power-assisted liquid-propellant rocket propulsion system capable of decreasing consumption of a propellant during preliminary cooling.

Another object of the present disclosure is to stabilize a turbopump driven during startup and achieve a reduction in mass of a device used for the stabilization.

An electric power-assisted liquid-propellant rocket propulsion system according to claim 1 includes: a pre-burner configured to generate combustion gas of a fuel and an oxidant; a main combustor configured to burn mixed gas of the fuel and the combustion gas discharged from the pre-burner; a turbopump including a turbine rotated by a flow of the combustion gas and a pump driven by a rotation of the turbine, the turbopump configured to supply the fuel from a fuel tank to the pre-burner and configured to supply the oxidant from an oxidant tank to the pre-burner and the main combustor; an electric motor configured to rotate the turbine; and a clutch configured to connect the electric motor and the turbine and releasing connection between the electric motor and the turbine.

The electric power-assisted liquid-propellant rocket propulsion system further includes a circulation passage configured to return the fuel and the oxidant discharged from the turbopump to the fuel tank and the oxidant tank.

The electric power-assisted liquid-propellant rocket propulsion system further includes a cooling device configured to cool the fuel tank and the oxidant tank.

The electric power-assisted liquid-propellant rocket propulsion system may further include: a first valve configured to regulate the amount of the fuel supplied to the pre-burner; a second valve configured to regulate the amount of the oxidant supplied to the main combustor; and a third valve configured to regulate the amount of the oxidant supplied to the pre-burner, wherein the first valve, the second valve, and the third valve may each be a flow control valve.

The electric power-assisted liquid-propellant rocket propulsion system may further include a laser ignitor configured to cause the pre-burner and the main combustor to ignite by laser beam.

### ADVANTAGEOUS EFFECTS

The present disclosure can provide an electric power-assisted liquid-propellant rocket propulsion system capable of decreasing consumption of a propellant during preliminary cooling.

The present disclosure can also provide an electric power-assisted liquid-propellant rocket propulsion system capable of stabilizing a turbopump driven during startup and achieving a reduction in mass of a device used for the stabilization.

### BRIEF DESCRIPTION OF DRAWINGS

FIG. 1 is a schematic diagram illustrating a configuration of an electric power-assisted liquid-propellant rocket propulsion system according to an embodiment not forming part of the claimed invention.
FIG. 2 is a diagram illustrating an operation of the electric power-assisted liquid-propellant rocket propulsion system shown in FIG. 1 during preliminary cooling.
FIG. 3 is a schematic diagram illustrating a configuration of a modified example of the electric power-assisted liquid-propellant rocket propulsion system in an embodiment according to the claimed invention.
FIG. 4 is a diagram illustrating an operation of the electric power-assisted liquid-propellant rocket propulsion system shown in FIG. 3 during preliminary cooling.

### DESCRIPTION OF EMBODIMENTS

An electric power-assisted liquid-propellant rocket propulsion system according to an embodiment of the present disclosure will be described below with reference to the appended drawings. The elements common to the respective drawings are indicated by the same reference numerals, and overlapping explanations are not repeated below. Hereinafter, the electric power-assisted liquid-propellant rocket propulsion system is referred to as a liquid-propellant rocket propulsion system for simplicity.

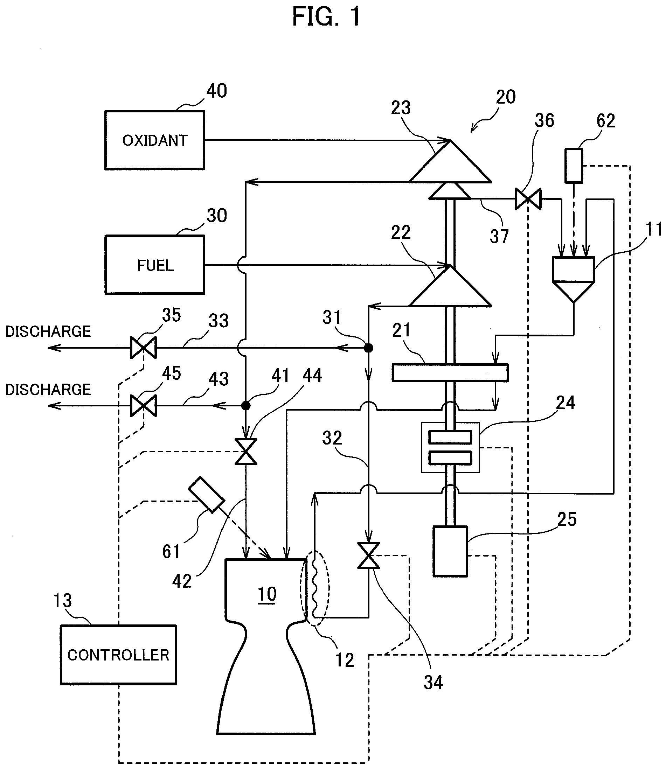

FIG. 1 is a schematic diagram illustrating a configuration of the liquid-propellant rocket propulsion system according to an embodiment not forming part of the claimed invention. As shown in FIG. 1, the liquid-propellant rocket propulsion system includes a main combustor 10, a pre-burner 11, and a turbopump 20. Hereinafter, the liquid-propellant rocket propulsion system is more simply referred to as a propulsion system. As used herein, the phrase "during preliminary cooling" refers to a period in which the propulsion system should be cooled when the main combustor 10 or the pre-burner 11 is not operating. The term "preliminary cooling" therefore includes not only cooling before launching a rocket but also cooling before the main combustor 10 or the pre-burner 11 operates again.

The propulsion system of the present embodiment uses liquid hydrogen or liquid hydrocarbon (such as liquid methane) as a fuel, and uses liquid oxygen as an oxidant. The operation of the propulsion system uses a staged-combustion cycle. Combustion gas generated in the pre-burner 11 is used to drive the turbopump 20 (in particular, a turbine 21) and is then burned in the main combustor 10.

A fuel is sucked by the turbopump 20 from a fuel tank 30 and supplied to the pre-burner 11 through a heat exchanger 12 provided at the main combustor 10. The fuel supplied to the heat exchanger 12 cools a combustion chamber of the main combustor 10.

An oxidant is also sucked by the turbopump 20 from an oxidant tank 40. Most of the oxidant sucked is supplied to the main combustor 10, and the rest is supplied to the pre-burner 11. The pre-burner 11 generates combustion gas of the fuel and the oxidant. The generated combustion gas flows through the turbine 21 of the turbopump 20 to serve as driving gas, and is then supplied to the main combustor 10.

The main combustor 10 burns mixed gas of the oxidant discharged from the turbopump 20 and the combustion gas discharged from the pre-burner 11. The combustion gas in the main combustor 10 is discharged from a nozzle through a throat. Expansion of the discharged combustion gas leads to acceleration so as to yield thrust of a rocket.

The turbopump 20 supplies a propellant (the fuel and the oxidant) to the main combustor 10 and the pre-burner 11. For example, the turbopump 20 supplies the fuel from the fuel tank 30 to the pre-burner 11, and supplies the oxidant from the oxidant tank 40 to the pre-burner 11 and the main combustor 10. The turbopump 20 includes the turbine 21, and a first pump (fuel pump) 22 and a second pump (oxidant pump) 23 driven by the turbine 21. The turbine 21, the first pump 22, and the third pump 23 may have conventional configurations. As described below, a rotating shaft of the turbopump 20 is connected to a rotating shaft of an electric motor 25 via a clutch 24.

The turbine 21 is rotated by a flow of the combustion gas flowing from the pre-burner 11 to the main combustor 10 so that the rotational force is transferred to the first pump 22 and the second pump 23. The first pump 22 and the second pump 23 are thus driven by the turbine 21. The first pump 22 sucks the fuel from the fuel tank 30 and pressurizes and discharges the fuel. The second pump 23 sucks the oxidant from the oxidant tank 40 and pressurizes and discharges the oxidant. The respective pumps 22 and 23 are each a centrifugal pump including a wheel, for example.

The propulsion system of the present embodiment includes the electric motor 25 and the clutch 24. The electric motor 25 is connected to the turbine 21 of the turbopump 20 via the clutch 24. The clutch 24 connects the rotating shaft of the electric motor 25 and the rotating shaft of the turbine 21 and releases the connection between the electric motor 25 and the turbine 21. The clutch 24 may have a conventional configuration. The electric motor 25 connected to the turbine 21 rotates so that the rotational force is transferred to the turbine 21 and the turbine 21 is thus rotated. The rotation of the turbine 21 rotates the respective wheels of the pumps 22 and 23 of the turbopump 20. The electric motor 25 thus can drive the respective pumps 22 and 23 via the clutch 24 and the turbine 21. When the clutch 24 releases the connection between the electric motor 25 and the turbine 21, the rotational force transferred from the electric motor 25 to the turbine 21 is stopped. The electric motor 25 and the clutch 24 are controlled by a controller 13.

The electric motor 25 is used for achieving at least two purposes. The first purpose is to drive the turbopump 20 at a low rotational speed to circulate a small amount of the propellant to keep a cooled state in the propulsion system. The second purpose is to drive the turbopump 20 at an intermediate rotational speed to provide a flow rate and pressurized conditions necessary for ignition in the main combustor 10 and the pre-burner 11 during startup of the propulsion system. After the propulsion system autonomously starts up in the latter operation, the rotational speed of the turbopump 20 increases to a level exceeding an operable range of the electric motor 25. In order to avoid damage to the power system caused by such excessive electromotive force of the electric motor 25, the clutch 24 physically (mechanically) separates the electric motor 25 from the rotating shaft of the turbopump 20.

A power source of the electric motor 25 can be changed (switched) depending on situations outside a rocket. For example, the power for the electric motor 25 is supplied from a storage battery (not shown) installed in the rocket or an external power source (not shown) before the rocket is launched, and is supplied from the storage battery (not shown) or a solar cell (not shown) after the rocket is launched.

The turbine 21, the first pump 22, and the second pump 23 may be fixed to the single rotating shaft as shown in FIG. 1, or separately fixed to the respective shafts of transfer mechanisms such as a gear. In either case, the rotational force from the turbine 21 is transferred to the first pump 22 and the second pump 23.

The first pump 22 and the second pump 23 of the turbopump 20 may each include the turbine 21 to suck and supply the fuel or the oxidant. The first pump 22 and the second pump 23 each including the turbine 21 independently include the electric motor 25 and the clutch 24 so that the combustion gas discharged from the pre-burner 11 is supplied to the main combustor 10 through the respective turbines. The rotational speed is separately set to the first pump 22 and the second pump 23 depending on the properties of the fuel and the oxidant and a presumed mixing ratio.

A passage of the fuel discharged from the turbopump 20 (the first pump 22) is branched at a branch point 31 into a main fuel passage 32 toward the heat exchanger 12 and an auxiliary fuel passage 33 through which the fuel flows during preliminary cooling. The main fuel passage 32 is provided with a fuel supply valve (first valve) 34. The fuel supply valve 34 regulates the amount of the fuel supplied to the pre-burner 11. The auxiliary fuel passage 33 is provided with a fuel drain valve 35. The fuel drain valve 35 is open outward (to the air or outer space) on the downstream side.

The fuel supply valve 34 and the fuel drain valve 35 are controlled by the controller 13. For example, the fuel supply valve 34 is closed during preliminary cooling, while the fuel drain valve 35 is open. The fuel supply valve 34 is open during combustion, while the fuel drain valve 35 is closed.

A passage of the oxidant discharged from the turbopump 20 (the second pump 23) is branched at a branch point 41 into a main oxidant passage 42 toward the main combustor 10 and an auxiliary oxidant passage 43 through which the oxidant flows during preliminary cooling. The main oxidant passage 42 is provided with an oxidant supply valve (second valve) 44. The oxidant supply valve 44 regulates the amount of the oxidant supplied to the main combustor 10. The auxiliary oxidant passage 43 is provided with an oxidant drain valve 45. The oxidant drain valve 45 is open outward (to the air or outer space) on the downstream side.

The oxidant supply valve 44 and the oxidant drain valve 45 are controlled by the controller 13. For example, the oxidant supply valve 44 is closed during preliminary cooling, while the oxidant drain valve 45 is open. The oxidant supply valve 44 is open during combustion, while the oxidant drain valve 45 is closed.

A passage 37 of the oxidant from the turbopump 20 to the pre-burner 11 is provided with an oxidant regulation valve (third valve) 36. The oxidant regulation valve 36 is controlled by the controller 13 to regulate the amount of the oxidant supplied to the pre-burner 11.

The operation of the propulsion system is described below. The order of the following operating process is an example.

Before the propellant is introduced to the propulsion system, the fuel supply valve 34 is closed, and the fuel drain valve 35 is open. The oxidant supply valve 44 is closed, and the oxidant drain valve 45 is open. The oxidant regulation valve 36 is closed.

The electric motor 25 and the turbine 21 are connected together via the clutch 24. The electric motor 25 rotates the turbine 21 while remaining connected together so as to drive the turbopump 20 (the first pump 22 and the second pump 23). The rotational speed of the turbine 21 rotated by the electric motor 25 is much lower than the rotational speed of the turbine 21 when the propulsion system is autonomously operating.

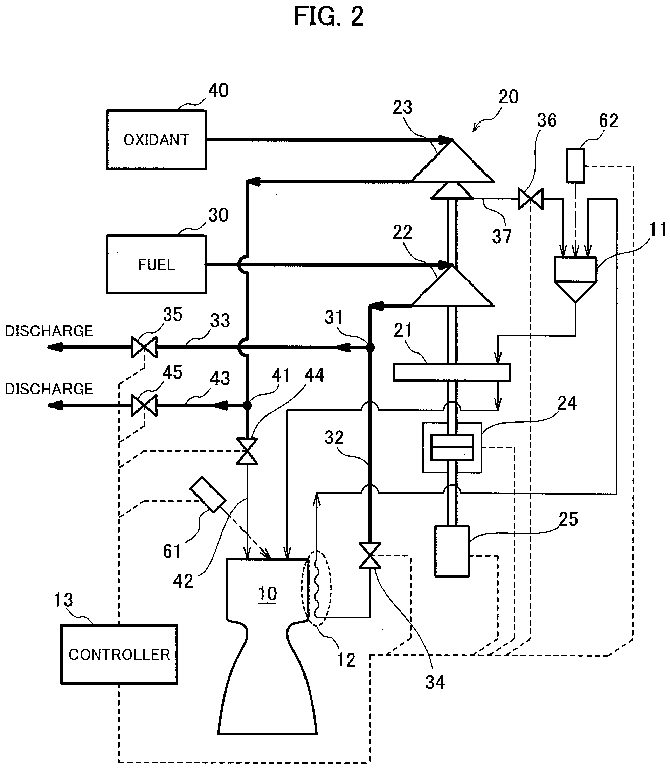

When the turbopump 20 is driven, the fuel is introduced to the propulsion system from the fuel tank 30, and the oxidant is introduced to the propulsion system from the oxidant tank 40. The fuel in a liquid state passes through the first pump 22 and is drained to the outside via the auxiliary fuel passage 33. The oxidant in a liquid state passes through the second pump 23 and is drained to the outside via the auxiliary oxidant passage 43 in the same manner. At least the passage from the fuel tank 30 to the branch point 31, the passage from the oxidant tank 40 to the branch point 41, the first pump 22, and the second pump 23 are thus cooled. FIG. 2 illustrates the passages, indicated by the solid lines, cooled by this operation.

When the fuel supply valve 34, the oxidant supply valve 44, and the oxidant regulation valve 36 are opened, the fuel or the oxidant flows to cool all passages shown in FIG. 1.

As described above, the electric motor 25 rotates (drives) the turbine 21 with the electric motor 25 and the turbine 21 connected together via the clutch 24. The entire propulsion system is thus cooled sufficiently. This configuration allows the first pump 22 and the second pump 23 to pressurize and supply the fuel and the oxidant to the pre-burner 11 at a rotational speed within the capacity of the driving force of the electric motor 25. When the mixing ratio of the fuel and the oxidant in the pre-burner 11 reaches a predetermined value, an ignitor (ignition device) 62 causes the pre-burner 11 to ignite (burn) the mixture. The pre-burner 11 then generates combustion gas of the fuel and the oxidant, and the generated combustion gas flows through the turbine 21 of the turbopump 20. The flow of the combustion gas rotates the turbine 21 so as to drive the first pump 22 and the second pump 23. The first pump 22 pressurizes and supplies the fuel to the pre-burner 11. The second pump 23 pressurizes and supplies the oxidant to the main combustor 10 and the pre-burner 11. When the pressure inside the main combustor 10 increases through these sequential steps, and the mixing ratio of the oxidant and the combustion gas from the pre-burner 11 reaches a predetermined value, an ignitor 61 causes the main combustor 10 to ignite (burn) the mixture to shift to regular combustion.

Before the combustion mode of the main combustor 10 is shifted to the regular combustion, the controller 13 controls the clutch 24 to release the connection between the electric motor 25 and the turbine 21. Namely, the clutch 24 blocks the rotational force transferred from the electric motor 25 to the turbine 21. For example, when the main combustor 10 starts ignition, the clutch 24 releases the connection between the electric motor 25 and the turbine 21. The release of the connection prevents excessive rotation of the electric motor 25 or generation of counter electromotive force caused by a high rotational speed of the turbopump 20 during combustion.

The present embodiment uses the electric motor 25 to drive the turbopump 20 so as to suck the propellant from the propellant tank (the fuel tank 30 and the oxidant tank 40) and supply the propellant to the propulsion system. The electric motor 25 also functions as an auxiliary device to drive the turbopump 20 during a period in which the turbine 21 is not sufficiently driven by a flow of the combustion gas discharged from the pre-burner 11 (for example, during startup). The propulsion system thus has no need to use a conventional pressure tank for pressurizing the propellant tank during preliminary cooling, so as to reduce a size of the pressure tank or eliminate the pressure tank to enhance efficient cooling. The efficient cooling decreases excessive consumption of the propellant. This also contributes to a reduction in weight of the propulsion system. Further, the regulation of the rotational speed of the electric motor 25 during startup can regulate the amount of the propellant supplied to the propulsion system, which facilitates pressure setting of the propellant for stable ignition, resulting in a simple system only requiring the electric motor 25 for startup.

During the initial stage of operation of the propulsion system, the combustion gas from the pre-burner 11 also, but gradually, drives the turbine 21. The maximum horsepower (maximum power) necessary for the electric motor 25 is thus only required to have a value sufficient to obtain a pressure for achieving stable ignition of the main combustor 10. Such a value is about one hundredth of a horsepower (tens of thousands of horsepower) of the turbopump 20 which needs to discharge the propellant at high pressure during regular combustion. The electric motor 25 thus can have a relatively small size, which also contributes to a reduction in weight of the propulsion system.

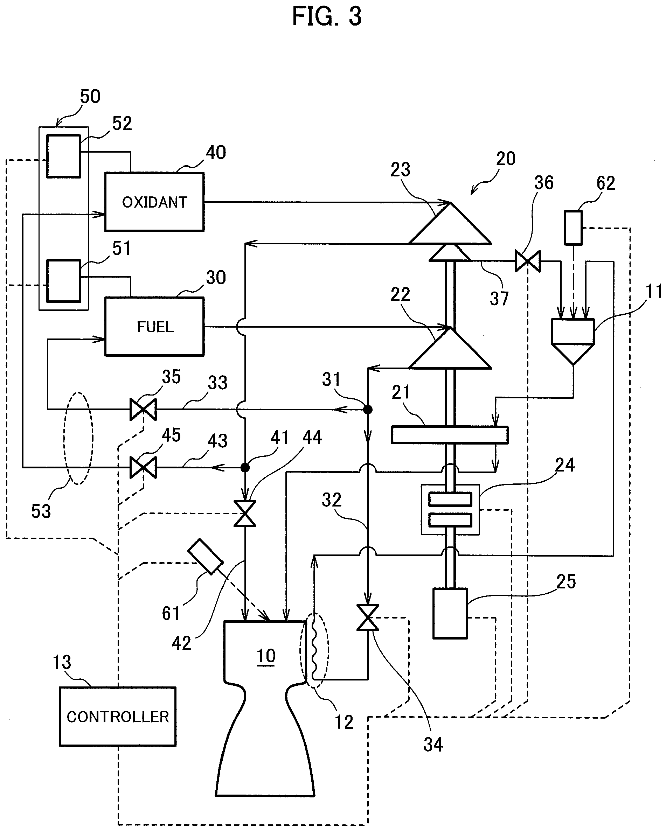

As shown in FIG. 3, the propulsion system in an embodiment according to the claimed invention further includes a circulation passage 53 through which the fuel and the oxidant discharged from the turbopump 20 flow back to the fuel tank 30 and the oxidant tank 40. The circulation passage 53 is composed of the auxiliary fuel passage 33 and the auxiliary oxidant passage 43. The auxiliary fuel passage 33 on the downstream side is connected to the fuel tank 30, and the auxiliary oxidant passage 43 on the downstream side is connected to the oxidant tank 40. The auxiliary fuel passage 33 allows the main fuel passage 32 to communicate with the fuel tank 30, and the auxiliary oxidant passage 43 allows the main fuel passage 42 to communicate with the oxidant tank 40.

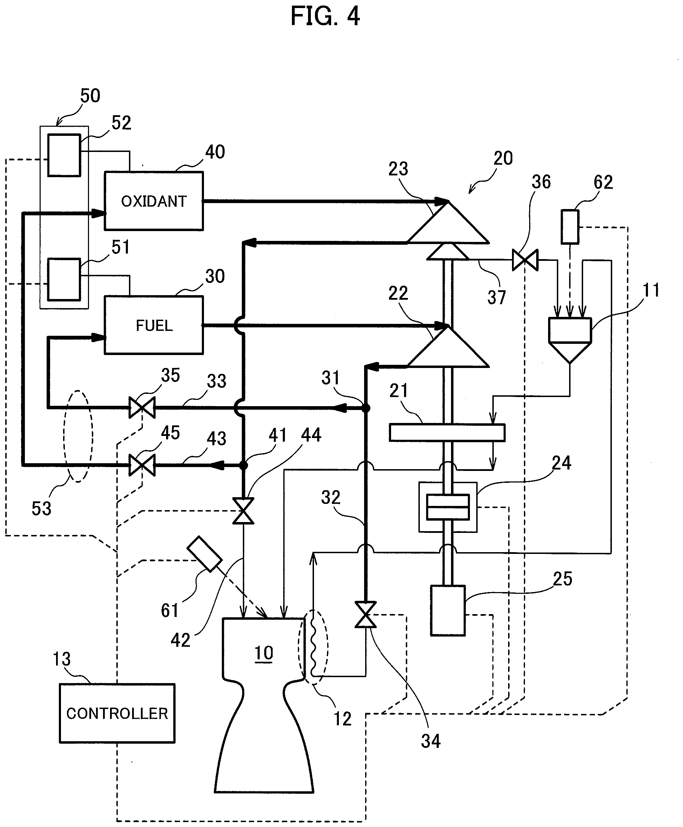

Since the circulation passage 53 is composed of the auxiliary fuel passage 33 and the auxiliary oxidant passage 43, the propellant can return to the fuel tank 30 and the oxidant tank 40. For example, the fuel in a liquid state passes through the first pump 22 and returns to the fuel tank 30 via the auxiliary fuel passage 33 during a state of preliminary cooling in which the fuel supply valve 34 is closed, the fuel drain valve 35 is open, the oxidant supply valve 44 is closed, and the oxidant drain valve 45 is open. The oxidant in a liquid state passes through the second pump 23 and returns to the oxidant tank 40 via the auxiliary oxidant passage 43 in the same manner. The propellant thus circulates in the propulsion system without being disposed of from the propulsion system. FIG. 4 illustrates the passages, indicated by the solid lines, cooled by the operation described above.

The circulation of the propellant is achieved by the operation of the turbopump 20 driven by the electric motor 25. The operation of the turbopump 20 driven by the electric motor 25 allows the reuse of the propellant for cooling of the propulsion system and combustion of the respective combustors so as to greatly decrease the amount of the propellant consumed. The decrease in the propellant consumed is effective particularly when a rocket is in orbit (outer space) where no external refill of the propellant is available.

The propellant is agitated when supplied to the fuel tank 30 and the oxidant tank 40 through the circulation passage 53. The electric motor 25, the turbopump 20, and the circulation passage 53 thus compose an agitator for the propellant in the fuel tank 30 and the oxidant tank 40. Since thermal diffusion of the propellant cannot be achieved by convection during orbiting, the propellant tends to result in uneven temperature distribution. The propulsion system of the present embodiment can agitate the propellant by the return of the propellant as described above, so as to suppress unevenness of the temperature distribution of the propellant in the respective tanks.

The propulsion system further includes, in addition to the circulation passage 53, a cooling device (such as a refrigerator and a cooler) 50 for enhancing cooling efficiency as necessary, for example. The cooling device 50 is an extremely-low-temperature refrigerator operated by electricity, and cools at least the fuel tank 30 and the oxidant tank 40. The cooling device 50 includes a first cooling unit 51 for cooling the fuel tank 30 and a second cooling unit 52 for cooling the oxidant tank 40, for example. These cooling units may be an integrated cooling unit. The cooling device 50 cools the propellant in the respective tanks and contributes to long-term preservation, suppression of evaporation, and liquefaction of the propellant.

As described above, the main fuel passage 32 is provided with the fuel supply valve (the first valve) 34, and the main oxidant passage 42 is provided with the oxidant supply valve (the second valve) 44. The passage 37 for the oxidant from the turbopump 20 to the pre-burner 11 is provided with the oxidant regulation valve (the third valve) 36. These valves 34, 44, and 36 are typically an ON/OFF valve which is kept fully open or closed. The present embodiment may use a flow control valve of which a degree of opening is sequentially (gradually) changed, instead of the ON/OFF valve. The degree of opening of the flow control valve is controlled by the controller 13.

The flow control valve is used to keep a mixing ratio of the combustion gas constant during startup assisted by the electric motor 25, for example, so as to enhance the stability of operation of the propulsion system. The flow control valve also serves as a throttle which increases or decreases thrust such that the degree of opening is adjusted appropriately during autonomous operation so as to keep the mixing ratio constant.

The mixing ratio of the fuel and the oxidant flowing into the pre-burner 11 is set to a fuel-rich value or an oxidant-rich value so as to avoid an excessive increase in temperature of the combustion gas to suppress erosion of the pre-burner 11. Typically, fuel-rich or oxidant-rich mixed gas tends to sharply vary in combustion temperature as the mixing ratio changes. The present embodiment sets the amount of the fuel and the oxidant supplied to the propulsion system by the electric motor 25 at the initial stage of preliminary cooling. The oxidant regulation valve 36, when serving as a flow control valve, can accurately regulate the amount of the oxidant with respect to the amount of the fuel flowing into the pre-burner 11. The mixing ratio can therefore be set to an appropriate value capable of minimizing a loss of the supplied amount and generating the combustion gas at sufficiently high temperature and pressure so as not to cause erosion of the pre-burner 11 or the turbine 21. Further, the ignition timing of the pre-burner 11 can be optimized, since the mixing ratio in the pre-burner 11 can easily be regulated.

The use of the flow control valve as the fuel supply valve 34 and the oxidant supply valve 44 can adjust the thrust continuously (at frequent intervals) during rated combustion, and change the mixing ratio for regulating the amount of the propellant consumed. Further, the ignition timing of the main combustor 10 can be optimized, since the mixing ratio in the main combustor 10 can easily be regulated.

As described above, the propulsion system includes the ignitor 61 for the main combustor 10 and the ignitor 62 for the pre-burner 11. The ignitors 61 and 62 each include an ignition charge, a spark plug, and a controller. Alternatively, the ignitor 61 and 62 may be laser ignitors using laser beam. Such a laser ignitor includes a light source emitting pulse laser beam at high power. The laser beam emitted from the light source heats or vaporizes (ablates) a target (not shown) in the main combustor 10 and the pre-burner 11 to ignite surrounding mixed gas.

Laser beam is known to easily be controlled in terms of time. The ignition by the laser beam is not influenced by circumferential conditions at the time of ignition as compared with other igniting methods. The laser ignitor therefore has a wide operating range from ignition under low pressure to rated combustion under high pressure. Since the amount of the propellant supplied to the propulsion system by the electric motor 25 is regulated, the mixing ratio of the propellant in the main combustor 10 and the pre-burner 11 can easily be controlled. The propulsion system can thus set appropriate and reliable ignition timing and simplify the ignition sequence, resulting in a great reduction of a risk upon development and reduction in development cost.

The laser ignitor has a simpler configuration than other ignitors. For example, a conventional ignitor using a spark plug typically occupies about 10% of an entire engine including a controller. The use of the laser ignitor instead of such a conventional ignitor can reduce the weight of the system.

It should be understood that the present disclosure is not intended to be limited to the embodiment described above, and that the present invention is defined by the appended claims and covers all modifications, equivalents and alternatives falling within the scope of the appended claims.

## Claims

1. An electric power-assisted liquid-propellant rocket propulsion system comprising:
a pre-burner (11) configured to generate combustion gas of a fuel and an oxidant;
a main combustor (10) configured to burn mixed gas of the oxidant and the combustion gas discharged from the pre-burner (11) ;
a turbopump (20) including a turbine (21) rotated by a flow of the combustion gas and a pump (22, 23) driven by a rotation of the turbine (21), the turbopump (20) configured to supply the fuel from a fuel tank (30) to the pre-burner (11) and configured to supply the oxidant from an oxidant tank (40) to the pre-burner (11) and the main combustor (10);
**characterized in that** the electric power-assisted liquid-propellant rocket propulsion system further comprises:
an electric motor (25) configured to rotate the turbine (21) ;
a clutch (24) configured to connect the electric motor (25) and the turbine (21) and releasing connection between the electric motor (25) and the turbine (21);
a circulation passage (53) configured to return the fuel and the oxidant discharged from the turbopump (20) to the fuel tank (30) and the oxidant tank (40), respectively; and
a cooling device (50) operated by electricity, configured to cool the fuel tank (30) and the oxidant tank (40).

2. The electric power-assisted liquid-propellant rocket propulsion system according to claim 1 , further comprising:
a first valve (34) configured to regulate an amount of the fuel supplied to the pre-burner (11);
a second valve (44) configured to regulate an amount of the oxidant supplied to the main combustor (10); and
a third valve (36) configured to regulate an amount of the oxidant supplied to the pre-burner (11),
the first valve (34), the second valve (44), and the third valve (36) each being a flow control valve.

3. The electric power-assisted liquid-propellant rocket propulsion system according to claim 1 or 2, further comprising a laser ignitor (61, 62) configured to cause the pre-burner (11) and the main combustor (10) to ignite by laser beam.

## Patentansprüche

1. Elektrisch unterstütztes Flüssigkeitsraketenantriebssystem, umfassend:
einen Vorbrenner (11), der konfiguriert ist, Verbrennungsgas aus einem Treibstoff und einem Oxidationsmittel zu erzeugen;
eine Hauptbrennkammer (10), die konfiguriert ist, Mischgas des Oxidationsmittels und des aus dem Vorbrenner (11) abgegebenen Verbrennungsgases zu verbrennen;
eine Turbopumpe (20) einschließlich einer Turbine (21), die durch einen Strom des Verbrennungsgases gedreht wird, und einer Pumpe (22, 23), die durch eine Drehung der Turbine (21) angetrieben wird, wobei die Turbopumpe (20) konfiguriert ist, den Treibstoff aus einem Treibstoffbehälter (30) dem Vorbrenner (11) zuzuführen, und konfiguriert ist, das Oxidationsmittel dem Vorbrenner (11) und der Hauptbrennkammer (10) aus einem Oxidationsmittelbehälter (40) zuzuführen;
**dadurch gekennzeichnet, dass** das elektrisch unterstützte Flüssigkeitsraketenantriebssystem ferner umfasst:
einen Elektromotor (25), der konfiguriert ist, die Turbine (21) zu drehen;
eine Kupplung (24), die konfiguriert ist, den Elektromotor (25) und die Turbine (21) zu verbinden und die Verbindung zwischen dem Elektromotor (25) und der Turbine (21) zu lösen;
einen Zirkulationskanal (53), der konfiguriert ist, den Treibstoff und das Oxidationsmittel, die von der Turbopumpe (20) abgegeben werden, entsprechend dem Treibstoffbehälter (30) und dem Oxidationsmittelbehälter (40) wieder zuzuführen; und
eine elektrisch betriebene Kühlvorrichtung (50), die konfiguriert ist, den Treibstoffbehälter (30) und den Oxidationsmittelbehälter (40) zu kühlen.

2. Elektrisch unterstütztes Flüssigkeitsraketenantriebssystem nach Anspruch 1, ferner umfassend:
ein erstes Ventil (34), das konfiguriert ist, eine Menge des Treibstoffs, der dem Vorbrenner (11) zugeführt wird, zu regulieren;
ein zweites Ventil (44), das konfiguriert ist, eine Menge des Oxidationsmittels, das der Hauptbrennkammer (10) zugeführt wird, zu regulieren; und
ein drittes Ventil (36), das konfiguriert ist, eine Menge des Oxidationsmittels, das dem Vorbrenner (11) zugeführt wird, zu regulieren,
wobei das erste Ventil (34), das zweite Ventil (44) und das dritte Ventil (36) jeweils ein Stromregelventil ist.

3. Elektrisch unterstütztes Flüssigkeitsraketenantriebssystem nach Anspruch 1 oder 2, ferner umfassend einen Laserzünder (61, 62), der konfiguriert ist, den Vorbrenner (11) und die Hauptbrennkammer (10) durch einen Laserstrahl zu zünden.

## Revendications

1. Système de propulsion de fusée à combustible liquide assisté par énergie électrique comprenant :
un pré-brûleur (11) configuré pour générer du gaz de combustion d'un carburant et d'un oxydant ;
une chambre de combustion principale (10) configurée pour brûler du gaz mélangé de l'oxydant et du gaz de combustion déchargé du pré-brûleur (11) ;
une turbopompe (20) incluant une turbine (21) tournée par un écoulement du gaz de combustion et une pompe (22, 23) entraînée par une rotation de la turbine (21), la turbopompe (20) étant configurée pour fournir le carburant d'un réservoir de carburant (30) au pré-brûleur (11) et configurée pour fournir l'oxydant d'un réservoir d'oxydant (40) au pré-brûleur (11) et à la chambre de combustion principale (10) ;
**caractérisé en ce que** le système de propulsion de fusée à combustible liquide assisté par énergie électrique comprend en outre :
un moteur électrique (25) configuré pour faire tourner la turbine (21) ;
un embrayage (24) configuré pour relier le moteur électrique (25) et la turbine (21) et libérant la connexion entre le moteur électrique (25) et la turbine (21) ;
un passage de circulation (53) configuré pour renvoyer le carburant et l'oxydant déchargés de la turbopompe (20) vers le réservoir de carburant (30) et le réservoir d'oxydant (40), respectivement ; et
un dispositif de refroidissement (50) fonctionnant par électricité, configuré pour refroidir le réservoir de carburant (30) et le réservoir d'oxydant (40).

2. Système de propulsion de fusée à combustible liquide assisté par énergie électrique selon la revendication 1, comprenant en outre :
une première soupape (34) configurée pour réguler une quantité du carburant fourni au pré-brûleur (11) ;
une deuxième soupape (44) configurée pour réguler une quantité de l'oxydant fourni à la chambre de combustion principale (10) ; et
une troisième soupape (36) configurée pour réguler une quantité de l'oxydant fourni au pré-brûleur (11),
la première soupape (34), la deuxième soupape (44) et la troisième soupape (36) ayant chacune une soupape de commande d'écoulement.

3. Système de propulsion de fusée à combustible liquide assisté par énergie électrique selon la revendication 1 ou 2, comprenant en outre : un allumeur laser (61, 62) configuré pour faire que le pré-brûleur (11) et la chambre de combustion principale (10) s'allument par faisceau laser.
